(19)

Europäisches
Patentamt
European
Patent Office
Office européen
des brevets

(11) **EP 3 018 517 A1**

(12) **EUROPEAN PATENT APPLICATION**

(43) Date of publication:
**11.05.2016 Bulletin 2016/19**

(51) Int Cl.:
***G02B 13/00*** *(2006.01)*

(21) Application number: **14191786.4**

(22) Date of filing: **05.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Calin Technology Co., Ltd.
Taichung City 427 (TW)**

(72) Inventor: **Hsu, Shu-Chuan
402 Taichung City (TW)**

(74) Representative: **Viering, Jentschura & Partner
mbB
Patent- und Rechtsanwälte
Kennedydamm 55 / Roßstrasse
40476 Düsseldorf (DE)**

(54) **Optical imaging lens**

(57)      An optical imaging lens (1-4) includes an aperture (ST) and a first to a fifth lenses (L1-L5) in order from an object side to an image side. The first lens (L1) is made of glass, and is a positive meniscus lens, of which the convex surface (S2) faces the object side. The second lens (L2) is a negative meniscus lens, of which the convex surface (S4) faces the object side. The third lens (L3) is a positive meniscus lens, of which the convex surface (S7) faces the image side. The fourth lens (L4) is made of glass, which is a positive meniscus lens with a refractive index no less than 1.7, wherein the convex surface (S9) thereof faces the image side. A diopter of the fifth lens (L5) turns from negative to positive from a center to a margin thereon.

FIG. 1

**Description**

**BACKGROUND OF THE INVENTION**

**1. Technical Field**

The present invention relates generally to optics, and more particularly to an optical imaging lens.

**2. Description of Related Art**

With the recent development of mobile devices, the market demand for lens modules rises. In consideration of convenience and portability, the market prefers mobile devices to be miniature and lightweight, and as a result, various industries such as automotive industry, video game industry, household appliances industry, etc. also start using miniature optical module to develop more convenient functions.

It's needless to say that the size of the optical imaging lenses applied in miniature mobile devices is also greatly reduced in recent years, and since customers would like the image resolution of photos taken by such mobile devices to be satisfying high, the optical imaging lenses must be able to provide high optical performance. Therefore, miniature size and high optical performance are two key requirements for optical imaging lenses in modem days.

In addition, the optical imaging lenses applied in mobile devices nowadays are getting wide angle; however, a wide angle system often has problems of limited view angle, distortion, and chromatic aberration, which affects the output image quality. In light of this, there is still room for improvement for the design of optical imaging lenses.

**BRIEF SUMMARY OF THE INVENTION**

In view of the above, the primary objective of the present invention is to provide an optical imaging lens which satisfies the requirements of miniature size, high optical performance, and wider view angle for a wide angle system.

The optical imaging lens provided in the present invention includes, in order from an object side to an image side along an optical axis, an aperture, a first lens, a second lens, a third lens, a fourth lens, and a fifth lens. The first lens is made of glass, and is a positive meniscus lens, wherein a convex surface thereof faces the object side, and a concave surface thereof faces the image side; at least one of the surfaces of the first lens is aspheric. The second lens is made of plastic, and is a negative meniscus lens, wherein a convex surface thereof faces the object side, and a concave surface thereof faces the image side; at least one of the surfaces of the second lens is aspheric. The third lens is made of plastic, and is a positive meniscus lens, wherein a convex surface faces the image side, and a concave surface thereof faces the object side; at least one of the surfaces of the third lens is aspheric. The fourth lens is made of glass, and is a positive meniscus lens with a refractive index no less than 1.7, wherein a convex surface thereof faces the image side, and a concave surface thereof faces the object side; at least one of the surfaces of the fourth lens is aspheric. The fifth lens is made of plastic, of which a diopter turns from negative to positive from where the optical axis passes through to a margin of the fifth lens L5.

In an embodiment, the two surfaces of the first lens are both aspheric.

In an embodiment, the two surfaces of the second lens are both aspheric.

In an embodiment, the two surfaces of the third lens are both aspheric.

In an embodiment, the two surfaces of the fourth lens are both aspheric.

In an embodiment, a surface of the fifth lens which faces the object side is concave at where the optical axis passes through.

In an embodiment, a radius of curvature of the surface of the fifth lens which faces the object side is negative at where the optical axis passes through, and the radius of curvature gradually turns from negative to positive from where the optical axis passes through to the margin of the fifth lens.

In an embodiment, a surface of the fifth lens which faces the image side is concave at where the optical axis passes through.

In an embodiment, a radius of curvature of the surface of the fifth lens which faces the image side is positive at where the optical axis passes through, and the radius of curvature gradually turns from positive to negative from where the optical axis passes through to the margin of the fifth lens.

In an embodiment, the optical imaging lens further satisfies: $1.19 \leq f/f1 \leq 1.50$; where f1 is a focal length of the first lens; f is a focal length of the optical imaging lens.

In an embodiment, the optical imaging lens further satisfies: $0.80 \leq f/f4 \leq 1.09$; where f4 is a focal length of the fourth lens; f is a focal length of the optical imaging lens.

In an embodiment, the optical imaging lens further satisfies: $-1.59 \leq f/f5 < -1.30$; where f5 is a focal length of the fifth lens; f is a focal length of the optical imaging lens.

In an embodiment, the optical imaging lens further satisfies: $0.08 \leq t10/f \leq 0.13$; where t10 is a thickness of the fifth lens; f is a focal length of the optical imaging lens.

In an embodiment, an Abbe number of the first lens is no less than 60.

With the aforementioned lens structure and materials, the purpose of getting miniature size and high optical performance can be achieved. In addition, the visible angle of a wide angle system can be effectively widened as well.

## BRIEF DESCRIPTION OF THE SEVERAL VIEWS OF THE DRAWINGS

The present invention will be best understood by referring to the following detailed description of some illustrative embodiments in conjunction with the accompanying drawings, in which

FIG. 1 is a schematic diagram of a first preferred embodiment of the present invention;

FIG. 2A is a diagram showing the field curvature of the optical imaging lens of the first preferred embodiment of the present invention;

FIG. 2B is a diagram showing the distortion of the optical imaging lens of the first preferred embodiment of the present invention;

FIG. 2C is a diagram showing the chromatic difference of magnification of the optical imaging lens of the first preferred embodiment of the present invention;

FIG. 2D is a diagram showing the spherical aberration of the optical imaging lens of the first preferred embodiment of the present invention;

FIG. 3 is a schematic diagram of a second preferred embodiment of the present invention;

FIG. 4A is a diagram showing the field curvature of the optical imaging lens of the second preferred embodiment of the present invention;

FIG. 4B is a diagram showing the distortion of the optical imaging lens of the second preferred embodiment of the present invention;

FIG. 4C is a diagram showing the chromatic difference of magnification of the optical imaging lens of the second preferred embodiment of the present invention;

FIG. 4D is a diagram showing the spherical aberration of the optical imaging lens of the second preferred embodiment of the present invention;

FIG. 5 is a schematic diagram of a third preferred embodiment of the present invention;

FIG. 6A is a diagram showing the field curvature of the optical imaging lens of the third preferred embodiment of the present invention;

FIG. 6B is a diagram showing the distortion of the optical imaging lens of the third preferred embodiment of the present invention;

FIG. 6C is a diagram showing the chromatic difference of magnification of the optical imaging lens of the third preferred embodiment of the present invention;

FIG. 6D is a diagram showing the spherical aberration of the optical imaging lens of the third preferred embodiment of the present invention;

FIG. 7 is a schematic diagram of a fourth preferred embodiment of the present invention;

FIG. 8A is a diagram showing the field curvature of the optical imaging lens of the fourth preferred embodiment of the present invention;

FIG. 8B is a diagram showing the distortion of the optical imaging lens of the fourth preferred embodiment of the present invention;

FIG. 8C is a diagram showing the chromatic difference of magnification of the optical imaging lens of the fourth preferred embodiment of the present invention; and

FIG. 8D is a diagram showing the spherical aberration of the optical imaging lens of the fourth preferred embodiment of the present invention.

## DETAILED DESCRIPTION OF THE INVENTION

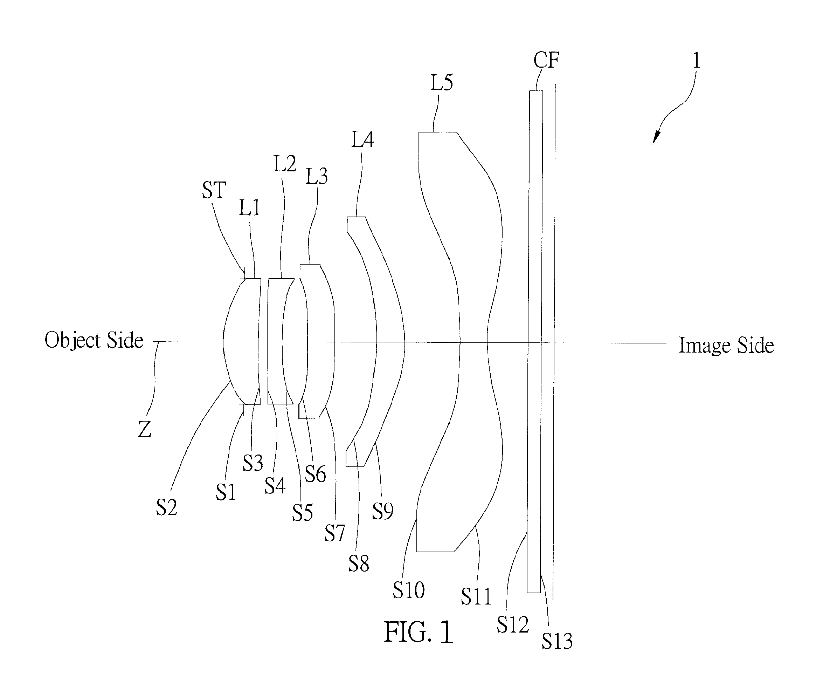

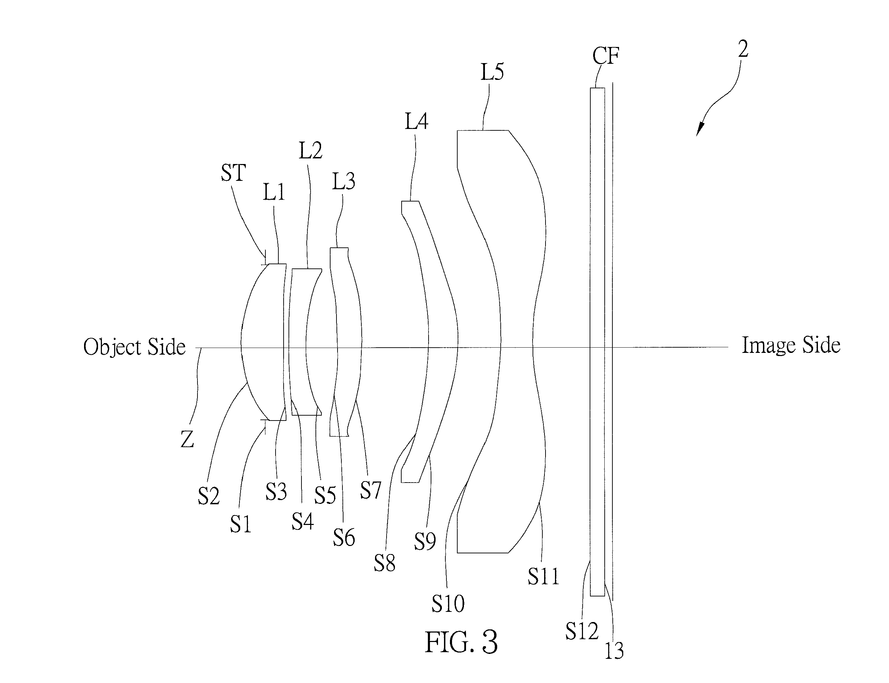

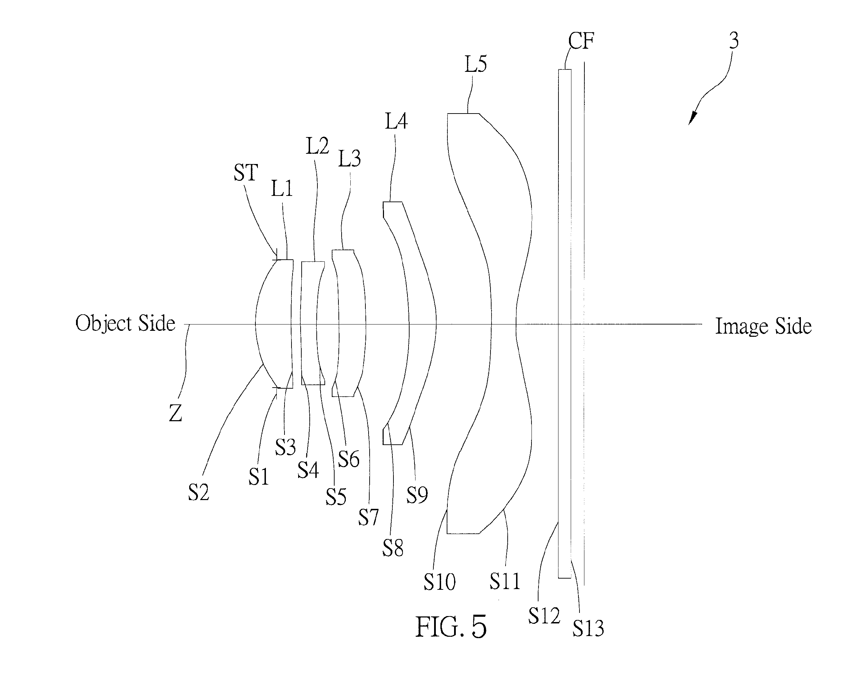

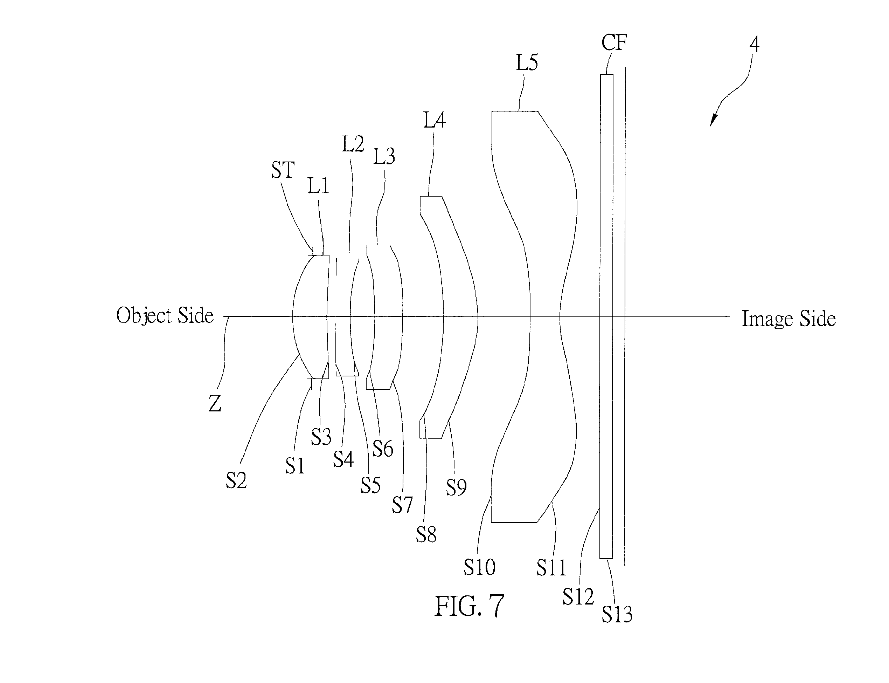

The first to the fourth preferred embodiments are respectively shown in FIG. 1, FIG. 3, FIG. 5, and FIG. 7. The aforementioned optical imaging lenses 1-4 all include, in order from an object side to an image side along an optical axis Z, an aperture ST, a first lens L1, a second lens L2, a third lens L3, a fourth lens L4, and a fifth lens L5, wherein the diopters of each lens L1-L5 are respectively positive, negative, positive, positive, and negative at where the optical axis goes through. Moreover, surfaces S2-S11 of each lens L1-L5 are all aspheric. In addition, there is an optical filter CF provided between the fifth lens L5 and the image side to filter out unwanted stray light if necessary, which enhances the optical performance.

In the optical imaging lenses 1-4 of the first to the fourth preferred embodiments, the first lens L1 is a meniscus lens with the convex surface S2 therefore facing the object side and the concave surface S3 thereof facing the image side; the second lens L2 is a meniscus lens with the convex surface S4 thereof facing the object side and the concave surface S5 thereof facing the image side; the third lens L3 is a meniscus lens with the concave surface S6 thereof facing the object side and the convex surface S7 thereof facing the image side; the fourth lens L4 is a meniscus lens with the concave surface S8 thereof facing the object side and the convex surface S9 thereof facing the image side. The surface S10 of the fifth lens L5 which faces the object side is concave at where the optical axis passes through, and the radius of curvature of the surface S10 gradually turns from negative to positive from where the optical axis passes through to a margin of the fifth lens L5; the surface S11 of the fifth lens L5 which faces the image side is concave at where the optical axis passes through, and the radius of curvature of the surface S11 gradually turns from positive to negative from where the optical axis passes through to the margin of the fifth lens L5. Specifically, the surfaces S10, S11 are designed in a way that the diopter of the fifth lens L5 gradually turns from negative to positive from where the optical axis passes through to the margin of the fifth lens L5.

In other to effectively enhance the optical performance of the optical imaging lenses 1-4 of the first to the fourth preferred embodiments, the system focal length f of the optical imaging lenses 1-4, the radius of curvature R of each surface S2-S11 at where the optical axis Z passes through, the distance D between each surface S2-S11 and the next surface S2-S11 (or the imaging plane) along the optical axis Z, the material of each lens S2-S11, the refractive index Nd of each lens S2-S11, the Abbe number Vd of each lens S2-S11, and the focal length of each lens S2-S11 are respectively listed in the following Table 1-4.

Table 1 (the first preferred embodiment)

| f = 4.63 mm | | | | | | | |
|---|---|---|---|---|---|---|---|
| Surface | R(mm) | D(mm) | Material | Nd | Vd | Focal Length | Remark |
| S1 | ∞ | -0.333 | | | | | Aperture ST |
| S2 | 1.728 | 0.572 | glass | 1.51 | 63.38 | 3.882 | First Lens L1 |
| S3 | 11.048 | 0.143 | | | | | |
| S4 | 19.007 | 0.250 | plastic | 1.64 | 22.46 | -8.305 | Second Lens L2 |
| S5 | 4.175 | 0.418 | | | | | |
| S6 | -16.335 | 0.456 | plastic | 1.53 | 55.75 | 29.316 | Third Lens L3 |
| S7 | -8.065 | 0.678 | | | | | |
| S8 | -4.102 | 0.473 | glass | 1.74 | 49.335 | 5.036 | Fourth Lens L4 |
| S9 | -2.058 | 0.906 | | | | | |
| S10 | -24.179 | 0.450 | plastic | 1.53 | 55.75 | -3.517 | Fifth Lens L5 |
| S11 | 2.048 | 0.676 | | | | | |
| S12 | ∞ | 0.210 | glass | 1.5168 | 64.1 | | Optical Filter CF |
| S13 | ∞ | 0.213 | | | | | |

Table 2 (the second preferred embodiment)

| f = 4.75 mm | | | | | | | |
|---|---|---|---|---|---|---|---|
| Surface | R(mm) | D(mm) | Material | Nd | Vd | Focal Length | Remark |
| S1 | ∞ | -0.300 | | | | | Aperture ST |
| S2 | 1.713 | 0.613 | glass | 1.53 | 62.50 | 3.206 | First Lens L1 |
| S3 | 124.498 | 0.076 | | | | | |
| S4 | 8.586 | 0.241 | plastic | 1.64 | 22.46 | -4.985 | Second Lens L2 |
| S5 | 2.320 | 0.455 | | | | | |

(continued)

| Surface | R(mm) | D(mm) | Material | Nd | Vd | Focal Length | Remark |
|---|---|---|---|---|---|---|---|
| f = 4.75 mm | | | | | | | |
| S6 | -12.309 | 0.361 | plastic | 1.53 | 55.75 | 16.868 | Third Lens L3 |
| S7 | -5.248 | 0.970 | | | | | |
| S8 | -3.828 | 0.434 | glass | 1.80 | 40.88 | 4.392 | Fourth Lens L4 |
| S9 | -1.937 | 0.620 | | | | | |
| S10 | -9.521 | 0.459 | plastic | 1.53 | 55.75 | -2.995 | Fifth Lens L5 |
| S11 | 1.950 | 0.839 | | | | | |
| S12 | ∞ | 0.210 | glass | 1.5168 | 64.1 | | Optical Filter CF |
| S13 | ∞ | 0.108 | | | | | |

Table 3 (the third preferred embodiment)

| Surface | R(mm) | D(mm) | Material | Nd | Vd | Focal Length | Remark |
|---|---|---|---|---|---|---|---|
| f = 4.64 mm | | | | | | | |
| S1 | ∞ | -0.334 | | | | | Aperture ST |
| S2 | 1.709 | 0.572 | glass | 1.51 | 63.40 | 3.840 | First Lens L1 |
| S3 | 10.924 | 0.157 | | | | | |
| S4 | 22.051 | 0.250 | plastic | 1.64 | 22.46 | -7.945 | Second Lens L2 |
| S5 | 4.158 | 0.367 | | | | | |
| S6 | -39.131 | 0.431 | plastic | 1.53 | 55.75 | 24.224 | Third Lens L3 |
| S7 | -9.747 | 0.702 | | | | | |
| S8 | -4.450 | 0.434 | glass | 1.74 | 49.33 | 5.090 | Fourth Lens L4 |
| S9 | -2.134 | 0.881 | | | | | |
| S10 | -28.066 | 0.402 | plastic | 1.53 | 55.75 | -3.289 | Fifth Lens L5 |
| S11 | 1.880 | 0.676 | | | | | |
| S12 | ∞ | 0.210 | glass | 1.5168 | 64.1 | | Optical Filter CF |
| S13 | ∞ | 0.213 | | | | | |

Table 4 (the fourth preferred embodiment)

| Surface | R(mm) | D(mm) | Material | Nd | Vd | Focal Length | Remark |
|---|---|---|---|---|---|---|---|
| f = 4.92 mm | | | | | | | |
| S1 | ∞ | -0.334 | | | | | Aperture ST |
| S2 | 1.711 | 0.537 | glass | 1.51 | 63.40 | 3.832 | First Lens First L1 |
| S3 | 11.229 | 0.157 | | | | | |
| S4 | 21.929 | 0.302 | plastic | 1.64 | 22.46 | -7.989 | Second Lens L2 |
| S5 | 4.168 | 0.391 | | | | | |
| S6 | -36.535 | 0.389 | plastic | 1.53 | 55.75 | 22.481 | Third Lens L3 |
| S7 | -9.059 | 0.695 | | | | | |

(continued)

| f = 4.92 mm | | | | | | | |
|---|---|---|---|---|---|---|---|
| Surface | R(mm) | D(mm) | Material | Nd | Vd | Focal Length | Remark |
| S8 | -4.329 | 0.641 | glass | 1.74 | 49.33 | 6.118 | Fourth Lens L4 |
| S9 | -2.363 | 0.890 | | | | | |
| S10 | -11.327 | 0.596 | plastic | 1.53 | 55.75 | -3.626 | Fifth Lens L5 |
| S11 | 2.374 | 0.676 | | | | | |
| S12 | ∞ | 0.210 | glass | 1.5168 | 64.1 | | Optical Filter CF |
| S13 | ∞ | 0.179 | | | | | |

In addition, for each leas L1-L5 of the optical imaging lens 1-4 in the first to the fourth preferred embodiments, the surface concavities z of each aspheric surface S2-S11 is defined by the following formula:

$$z = \frac{ch^2}{1 + \sqrt{1 - (1+k)c^2 h^2}} + \alpha_2 h^4 + \alpha_3 h^6 + \alpha_4 h^8 + \alpha_5 h^{10} + \alpha_6 h^{12} + \alpha_7 h^{14} + \alpha_8 h^{16}$$

where:

z is the surface concavity;
$c$ is the reciprocal of the radius of curvature;
h is half the off-axis height of the surface;
k is conic constant; and
$\alpha_2$-$\alpha_8$ respectively represents different order coefficient of h.

The conic constant k and each order coefficient $\alpha_2$-$\alpha_8$ of the optical imaging lenses 1-4 of the first to the fourth preferred embodiments of the present invention are respectively listed in the following Table 5-8.

Table 5 (the first preferred embodiment)

| Surface | S2 | S3 | S4 | S5 | S6 | S7 | S8 | S9 | S10 | S11 |
|---|---|---|---|---|---|---|---|---|---|---|
| $k$ | 2.7193E-01 | -7.2965E+00 | -1.6200E+01 | -3.2244E+00 | 8.8961E+01 | 9.7118E+00 | -5.7472E-01 | -5.2432E+00 | 2.0757E+01 | -7.5049E+00 |
| $\alpha_2$ | -1.0938E-02 | -1.5703E-02 | -3.2758E-02 | -4.3365E-03 | -7.5561E-02 | -4.9790E-02 | 2.6334E-02 | -1.2958E-02 | -6.4512E-02 | -3.6459E-02 |
| $\alpha_3$ | 3.4718E-02 | 2.5513E-03 | 5.5589E-02 | 7.5965E-02 | -2.0390E-02 | -2.4459E-02 | -1.7339E-02 | 1.0721E-02 | 1.4355E-02 | 7.8179E-03 |
| $\alpha_4$ | -6.1513E-02 | 1.2456E-02 | 2.6536E-02 | -5.8037E-02 | 7.3374E-03 | 4.9454E-03 | 3.0237E-03 | -4.5330E-03 | -1.0864E-03 | -1.1436E-03 |
| $\alpha_5$ | 3.8577E-02 | -5.9488E-03 | -1.1999E-02 | 2.1176E-02 | 1.4800E-02 | 5.8109E-03 | -5.4406E-04 | 1.1039E-03 | -6.8865E-06 | 9.5397E-05 |
| $\alpha_6$ | 1.9402E-02 | -2.3244E-02 | 8.1746E-03 | 3.4799E-02 | -1.1147E-02 | -3.2664E-03 | -5.0502E-05 | -7.9198E-05 | 5.5027E-06 | -4.7682E-06 |
| $\alpha_7$ | -3.3654E-02 | 1.9112E-02 | -6.6826E-03 | -4.3746E-02 | -1.9103E-02 | -2.1227E-03 | 7.7197E-05 | -1.8783E-05 | -2.4707E-07 | 1.5369E-07 |
| $\alpha_8$ | 7.5688E-03 | -1.5547E-02 | -5.8667E-03 | 1.0117E-02 | 1.6949E-02 | 2.1905E-03 | -7.4052E-06 | 2.9547E-06 | 1.7746E-09 | -2.4779E-09 |

Table 6 (the second preferred embodiment)

| Surface | S2 | S3 | S4 | S5 | S6 | S7 | S8 | S9 | S10 | S11 |
|---|---|---|---|---|---|---|---|---|---|---|
| k | 5.8023E-01 | 0.0000E+00 | 0.0000E+00 | -2.4699E+00 | 0.0000E+00 | 0.0000E+00 | 0.0000E+00 | -5.6044E+00 | 0.0000E+00 | -1.0546E+01 |
| $\alpha_2$ | -9.2459E-03 | 3.5292E-02 | -1.4693E-02 | -5.4218E-03 | -6.9473E-02 | -5.1289E-02 | 3.0064E-02 | -1.0703E-02 | -5.6145E-02 | -3.7625E-02 |
| $\alpha_3$ | 1.1223E-02 | -7.3299E-03 | 3.7101E-02 | 6.7275E-02 | -2.9333E-02 | -2.1755E-02 | -1.4886E-02 | 8.8375E-03 | 1.3144E-02 | 7.0689E-03 |
| $\alpha_4$ | -2.1941E-02 | 1.6817E-02 | -3.0733E-02 | -5.9806E-02 | 6.6311E-03 | 6.0095E-03 | 3.0762E-03 | -3.8649E-03 | -9.8653E-04 | -1.0367E-03 |
| $\alpha_5$ | 1.6260E-02 | 1.2154E-02 | 1.2759E-02 | 3.0630E-02 | 1.3769E-02 | 4.0255E-03 | -4.8094E-04 | 9.7356E-04 | -6.7664E-06 | 8.1895E-05 |
| $\alpha_6$ | 3.9726E-03 | -1.1190E-02 | 1.9413E-02 | 2.0263E-02 | -6.4692E-03 | -4.1555E-03 | -5.3219E-05 | -6.1505E-05 | 4.5888E-06 | -4.0855E-06 |
| $\alpha_7$ | -1.0745E-02 | 7.3448E-03 | -6.9370E-03 | -3.3194E-02 | -1.1948E-02 | -1.1399E-03 | 5.8058E-05 | -1.5601E-05 | -1.8042E-07 | 1.1944E-07 |
| $\alpha_8$ | 8.8811E-03 | 6.7103E-03 | -1.4146E-02 | 1.0625E-02 | 1.2157E-02 | 3.9598E-03 | -7.1924E-06 | 2.0338E-06 | 6.9815E-10 | 1.1217E-09 |

Table 7 (the third preferred embodiment)

| Surface | S2 | S3 | S4 | S5 | S6 | S7 | S8 | S9 | S10 | S11 |
|---|---|---|---|---|---|---|---|---|---|---|
| k | 2.6954E-01 | 0.0000E+00 | 0.0000E+00 | -4.2011E+00 | 0.0000E+00 | 0.0000E+00 | 0.0000E+00 | -6.7446E+00 | 0.0000E+00 | -8.0697E+00 |
| $\alpha_2$ | -9.9321E-03 | -1.5607E-02 | -3.2241E-02 | -5.2374E-03 | -6.7573E-02 | -4.7236E-02 | 2.2146E-02 | -1.5848E-02 | -6.4575E-02 | -3.6514E-02 |
| $\alpha_3$ | 3.1196E-02 | 5.8158E-03 | 5.7000E-02 | 7.8918E-02 | -2.4233E-02 | -2.5514E-02 | -1.6884E-02 | 1.0974E-02 | 1.4297E-02 | 7.8597E-03 |
| $\alpha_4$ | -6.0081E-02 | 1.0840E-02 | -2.2461E-02 | -5.3639E-02 | 5.9071E-03 | 5.0120E-03 | 3.0435E-03 | -4.4762E-03 | -1.0887E-03 | -1.1505E-03 |
| $\alpha_5$ | 3.8120E-02 | -5.7493E-03 | -8.1603E-03 | 2.0375E-02 | 1.4993E-02 | 6.5296E-03 | -5.5556E-04 | 1.1073E-03 | -6.9500E-06 | 9.4774E-05 |
| $\alpha_6$ | 1.8202E-02 | -1.9745E-02 | 1.2320E-02 | 3.4579E-02 | -9.4918E-03 | -2.8780E-03 | -5.4605E-05 | -8.0017E-05 | 5.5009E-06 | -4.7877E-06 |
| $\alpha_7$ | -3.3389E-02 | 2.4435E-02 | -1.0767E-03 | -4.1337E-02 | -1.7075E-02 | -2.0471E-03 | 7.6000E-05 | -1.9229E-05 | -2.4686E-07 | 1.5444E-07 |
| $\alpha_8$ | 1.0401E-02 | -1.0046E-02 | -3.3035E-03 | 1.6121E-02 | 1.7967E-02 | 2.1670E-03 | -7.8168E-06 | 2.8101E-06 | 1.8846E-09 | -2.3241E-09 |

Table 8 (the fourth preferred embodiment)

| Surface | S2 | S3 | S4 | S5 | S6 | S7 | S8 | S9 | S10 | S11 |
|---|---|---|---|---|---|---|---|---|---|---|
| k | 2.6954E-01 | 0.0000E+00 | 0.0000E+00 | -4.2011E+00 | 0.0000E+00 | 0.0000E+00 | 0.0000E+00 | -6.3789E+00 | 0.0000E+00 | -8.2990E+00 |
| $\alpha_2$ | -9.9321E-03 | -1.5607E-02 | -3.2241E-02 | -5.2374E-03 | -6.7573E-02 | -3.9776E-02 | 2.3014E-02 | -1.7002E-02 | -6.1906E-02 | -3.6514E-02 |
| $\alpha_3$ | 3.1933E-02 | 7.9559E-03 | 5.5315E-02 | 7.8737E-02 | -3.0962E-02 | -3.1061E-02 | -1.6721E-02 | 1.0782E-02 | 1.4181E-02 | 7.8597E-03 |
| $\alpha_4$ | -5.9363E-02 | 1.0840E-02 | -2.2461E-02 | -5.6518E-02 | 4.3418E-03 | 1.7117E-03 | 2.7558E-03 | -4.4762E-03 | -1.0887E-03 | -1.1505E-03 |
| $\alpha_5$ | 3.8464E-02 | -5.7493E-03 | -8.1603E-03 | 1.3714E-02 | 1.4494E-02 | 6.5296E-03 | -6.7352E-04 | 1.1073E-03 | -6.9500E-06 | 9.4774E-05 |
| $\alpha_6$ | 1.7735E-02 | -1.9745E-02 | 1.2320E-02 | 3.4579E-02 | -1.0573E-02 | -2.5645E-03 | -5.2005E-05 | -8.0017E-05 | 5.5009E-06 | -4.7877E-06 |
| $\alpha_7$ | -3.3389E-02 | 2.1837E-02 | -6.0858E-03 | -3.7295E-02 | -2.0136E-02 | -2.0471E-03 | 7.6000E-05 | -1.9229E-05 | -2.4686E-07 | 1.5444E-07 |
| $\alpha_8$ | 1.0401E-02 | -1.0046E-02 | -3.3035E-03 | 1.6121E-02 | 1.7967E-02 | 2.1670E-03 | -7.8168E-06 | 2.8101E-06 | 1.8846E-09 | -2.3241E-09 |

In addition, with the aperture ST and the aforementioned aspheric design for the lenses L1-L5, the problem of distortion which tends to happen in wide angle optical design can be effectively fixed. Moreover, the first lens L1 and the fourth lens L4 are made of glass, and through the arrangement of diopters of the lenses L1-L5 as positive, negative, positive, positive, and negative, the optical imaging lenses 1-4 can provide high imaging quality, which effectively achieves the purpose of getting miniature size, providing wide angle, and eliminating optical distortion. Specifically, each of the optical imaging lenses 1-4 satisfies the following rules:

$$(1) \quad Vd1 \geq 60;$$

$$(2) \quad Nd4 \geq 1.7;$$

$$(3) \quad 1.19 \leq f/f1 \leq 1.50;$$

$$(4) \quad 0.80 \leq f/f4 \leq 1.09;$$

$$(5) \quad -1.59 \leq f/f5 \leq -1.30;$$

$$(6) \quad 0.08 \leq t10/f \leq 0.13;$$

where, Vd1 is the Abbe number of the first lens L1; Nd4 is the refractive index of the fourth lens L4; f is the focal length of the optical imaging lenses 1-4; f1 is the focal length of the first lens L1; f4 is the focal length of the fourth lens L4; f5 is the focal length of the fifth lens L5; t10 is the thickness of the fifth lens L5 at where the optical axis passes through.

When rules (1) to (3) are satisfied, the total length of each of the optical imaging lenses 1-4 can be greatly shortened; when rules (4) to (6) are satisfied, the peripheral distortion can be effectively eliminated, and the chromatic difference of magnification, spherical aberration, and the field curvature can be reduced as well. In addition, with the aspheric shape of the fifth lens L5, the light passing through the periphery of the fifth lens L5 can be effectively suppressed, which reduces the incidence angle, and therefore eases the melange effect due to large angle. In other words, if the above rules are not satisfied, there emerges the problem of poor chromatic difference of magnification and low imaging quality, and the size of the lens cannot be miniature.

The detailed data of the optical imaging lenses 1-4 of the first to the fourth preferred embodiments of the present invention are listed in the following Table 9.

Table 9

|  | First Preferred Embodiment | Second Preferred Embodiment | Third Preferred Embodiment | Fourth Preferred Embodiment |
|---|---|---|---|---|
| TTL | 5.45 | 5.385 | 5.66 | 5.3 |
| f | 4.63 | 4.75 | 4.64 | 4.92 |
| f1 | 3.882 | 3.206 | 3.84 | 3.832 |
| f2 | -8.305 | -4.985 | -7.945 | -7.989 |
| f3 | 29.316 | 16.868 | 24.224 | 22.481 |
| f4 | 5.036 | 4.392 | 5.09 | 6.118 |
| f5 | -3.517 | -2.995 | 3.289 | -3.626 |
| t10 | 0.45 | 0.459 | 0.402 | 0.596 |
| v1 | 63.3 | 62.5 | 63.4 | 63.4 |

(continued)

|  | First Preferred Embodiment | Second Preferred Embodiment | Third Preferred Embodiment | Fourth Preferred Embodiment |
|---|---|---|---|---|
| nd4 | 1.74 | 1.8 | 1.74 | 1.74 |
| f/f1 | 1.192684 | 1.481597 | 1.208333 | 1.283925 |
| f/f4 | 0.91938 | 1.081512 | 0.911591 | 0.804184 |
| f/f5 | -1.31646 | -1.58598 | 1.410763 | -1.35687 |
| t10/f | 0.097192 | 0.096632 | 0.086638 | 0.121138 |

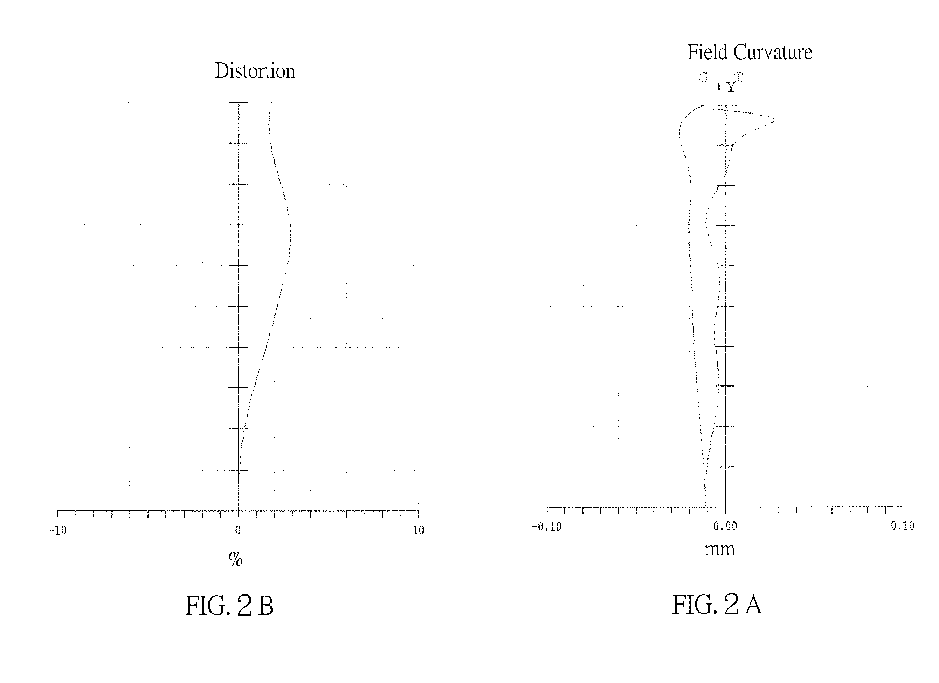

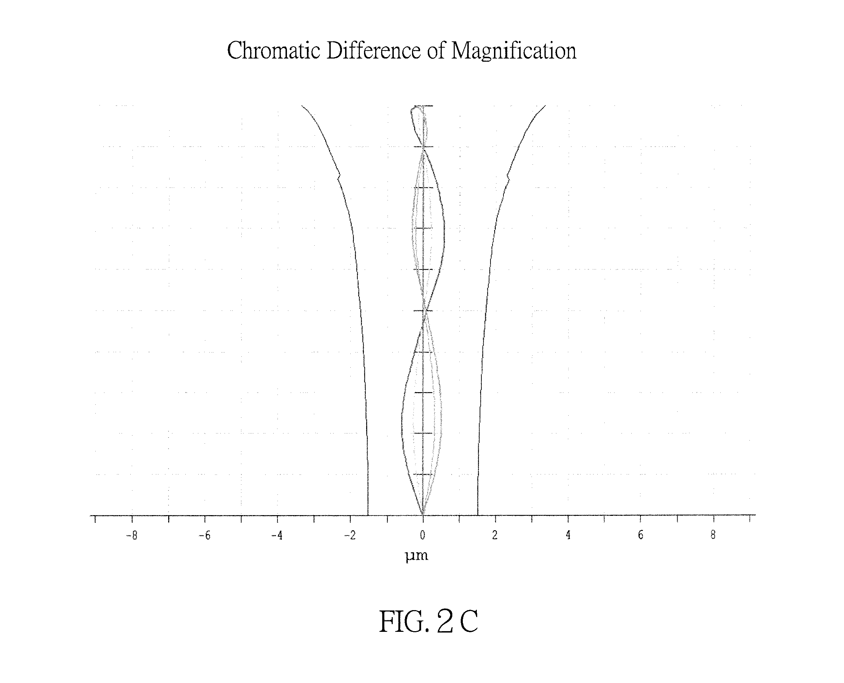

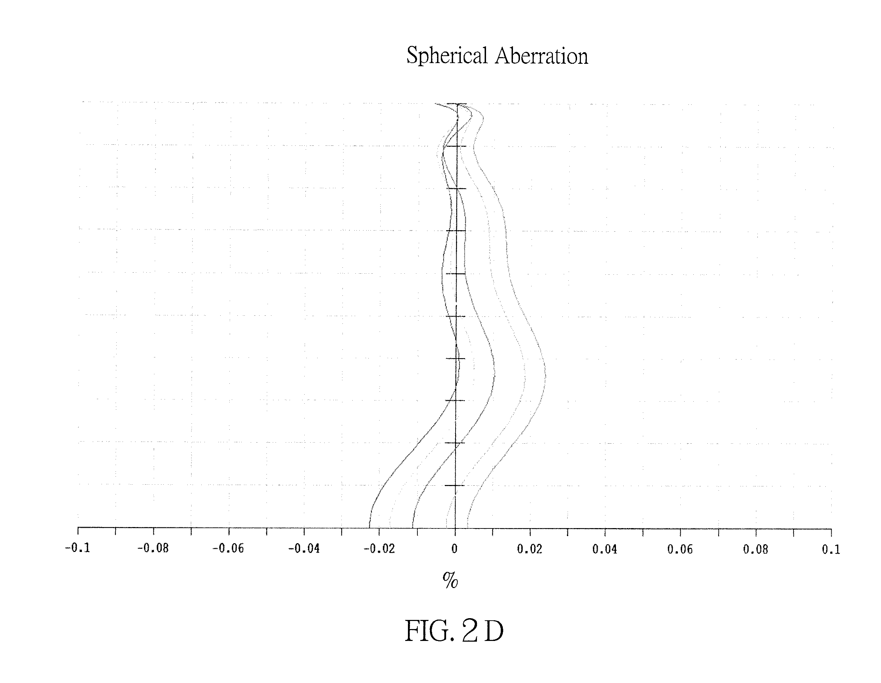

As shown in FIG. 2A to 2D, the optical imaging lens 1 of the first preferred embodiment of the present invention is able to provide high imaging quality, wherein the maximum field curvature of the optical imaging lens 1 does not exceed -0.03mm and 0.03mm, which can be seen in FIG. 2A; the maximum distortion of the optical imaging lens 1 does not exceed 0% and 3%, which can be seen in FIG. 2B; the chromatic difference of magnification of the optical imaging lens 1 does not exceed -1$\mu$m and 1$\mu$m, which can be seen in FIG. 2C; the spherical aberration of the optical imaging lens 1 does not exceed -0.03 mm and 0.03mm, which can be seen in FIG. 2D. In other words, the optical imaging lens 1 provides high optical performance.

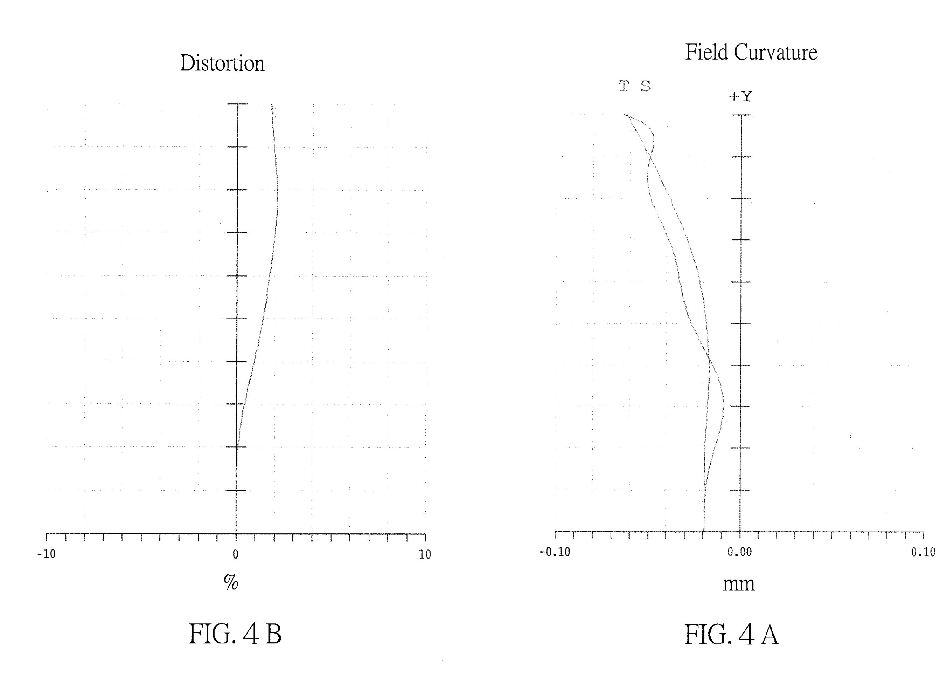

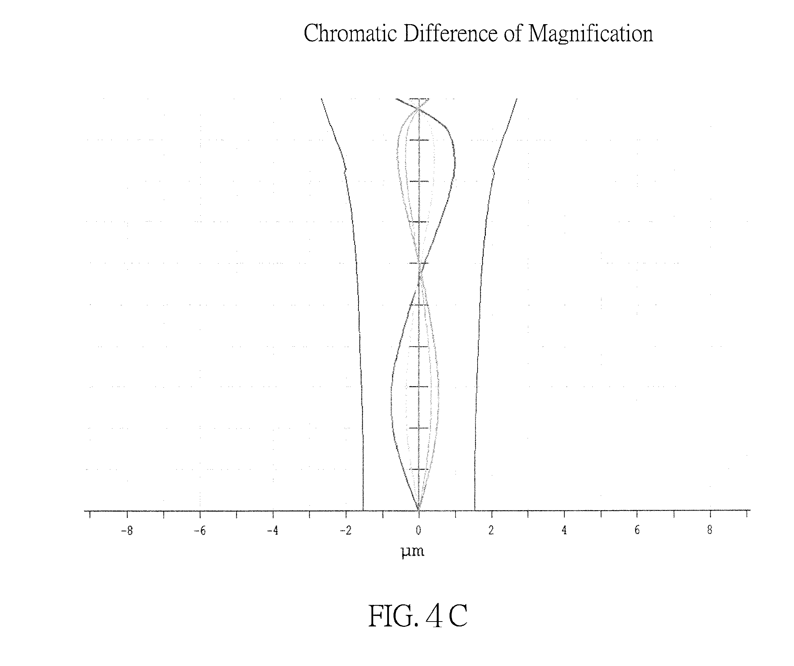

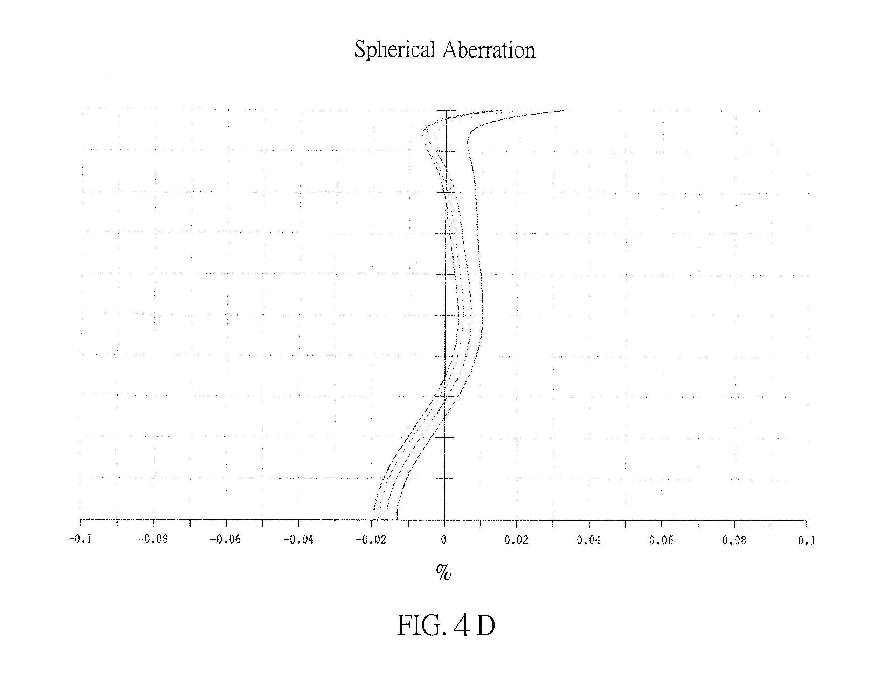

Similarly, as shown in FIG. 4A to 4D, the optical imaging lens 2 of the second preferred embodiment of the present invention is also able to provide high imaging quality, wherein the maximum field curvature of the optical imaging lens 2 does not exceed -0.07mm and 0mm, which can be seen in FIG. 4A; the maximum distortion of the optical imaging lens 2 does not exceed 0% and 3%, which can be seen in FIG. 4B; the chromatic difference of magnification of the optical imaging lens 2 does not exceed -2$\mu$m and 2$\mu$m, which can be seen in FIG. 4C; the spherical aberration of the optical imaging lens 2 does not exceed -0.02 mm and 0.04mm, which can be seen in FIG. 4D. In other words, the optical imaging lens 2 provides high optical performance.

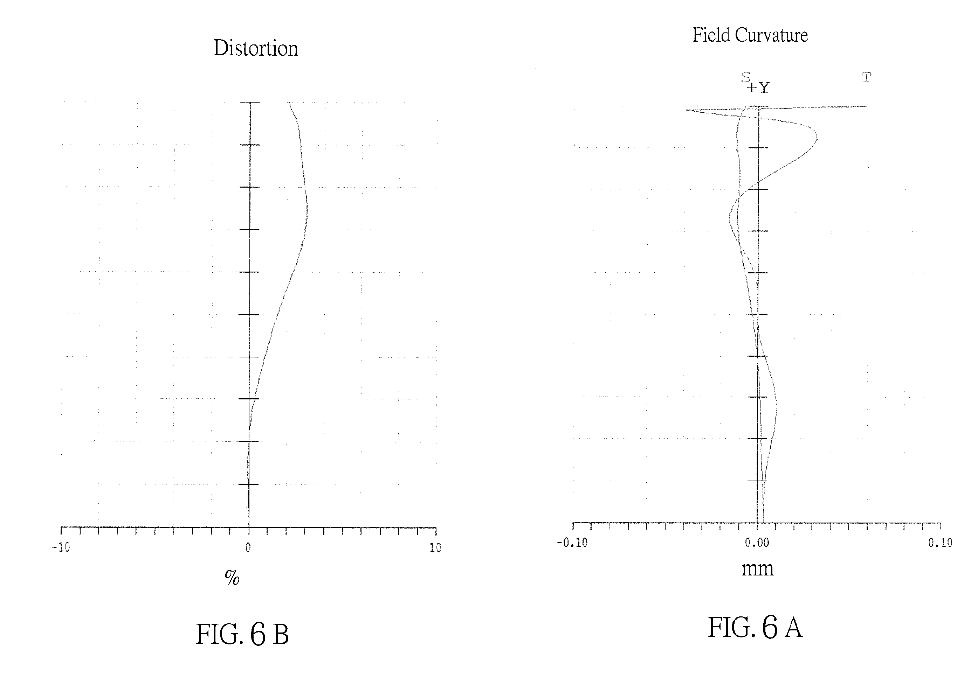

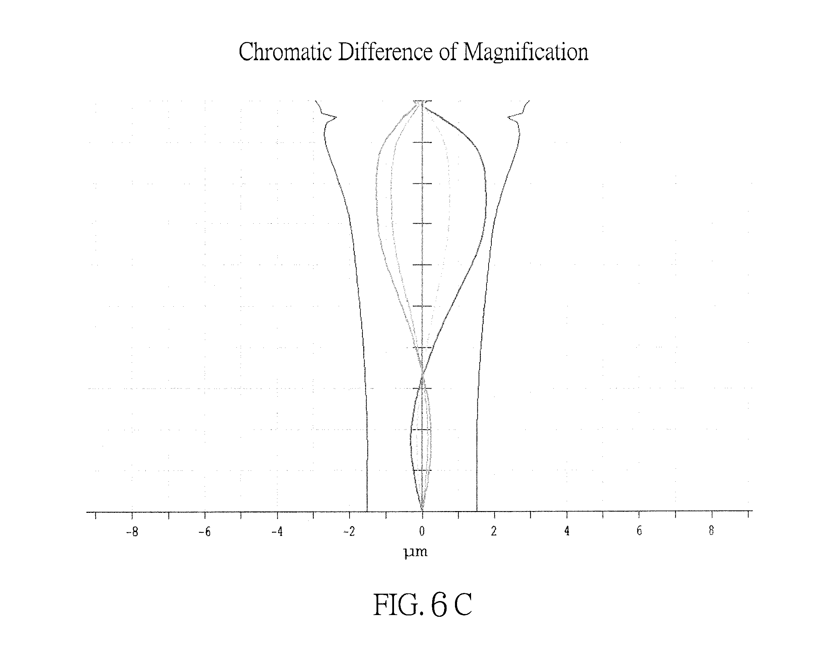

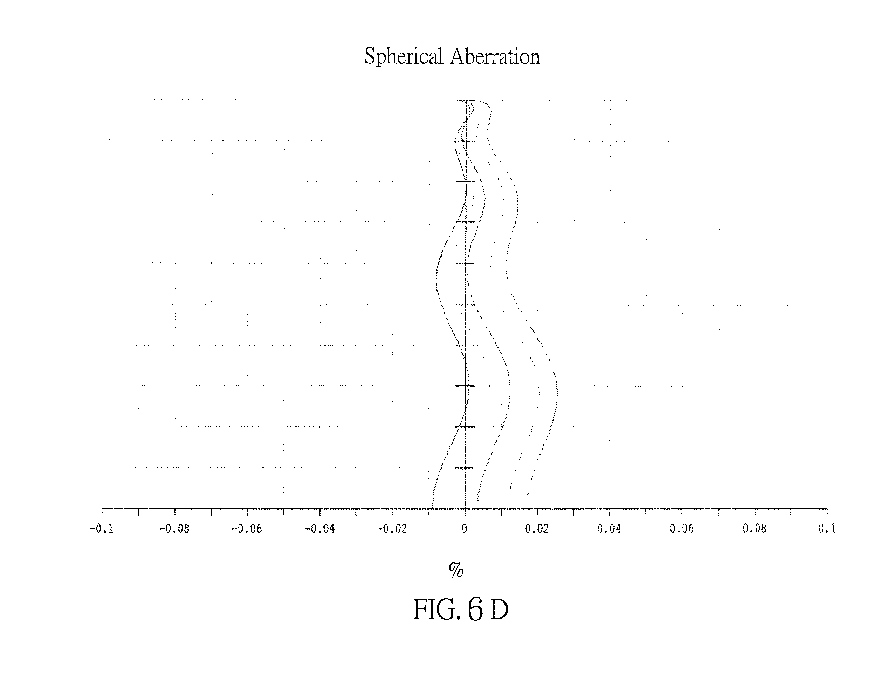

In addition, as shown in FIG. 6A to 6D, the optical imaging lens 3 of the third preferred embodiment of the present invention is also able to provide high imaging quality, wherein the maximum field curvature of the optical imaging lens 3 does not exceed -0.04mm and 0.06mm, which can be seen in FIG. 6A; the maximum distortion of the optical imaging lens 3 does not exceed 0% and 3%, which can be seen in FIG. 6B; the chromatic difference of magnification of the optical imaging lens 3 does not exceed -2$\mu$m and 2$\mu$m, which can be seen in FIG. 6C; the spherical aberration of the optical imaging lens 3 does not exceed -0.01 mm and 0.03mm, which can be seen in FIG. 6D. In other words, the optical imaging lens 3 provides high optical performance.

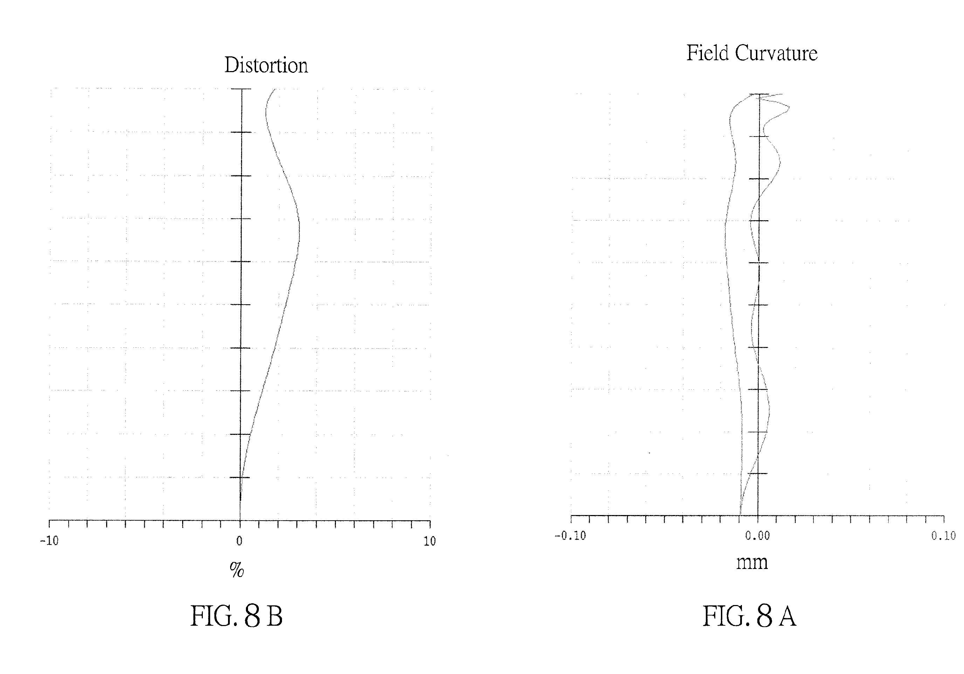

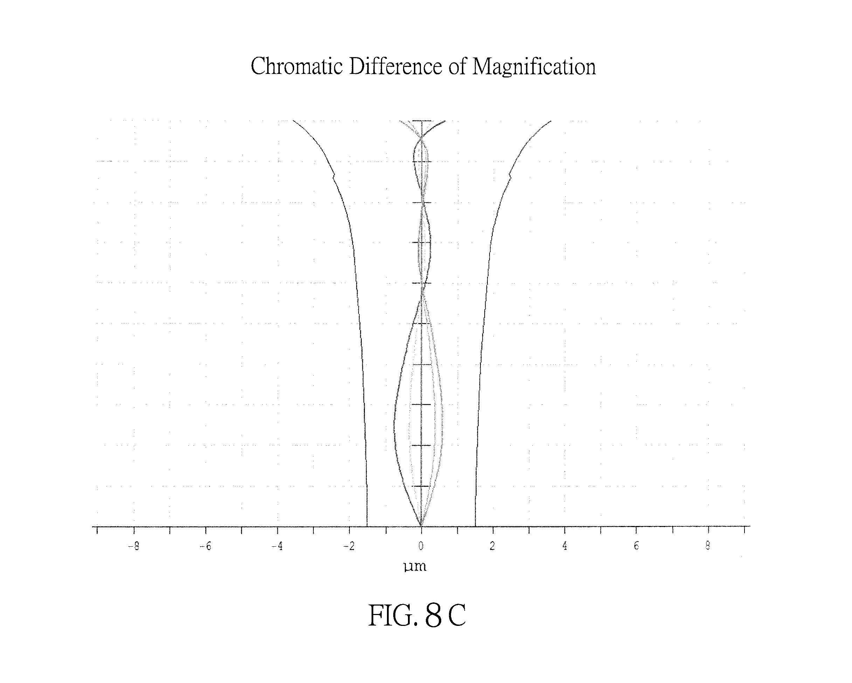

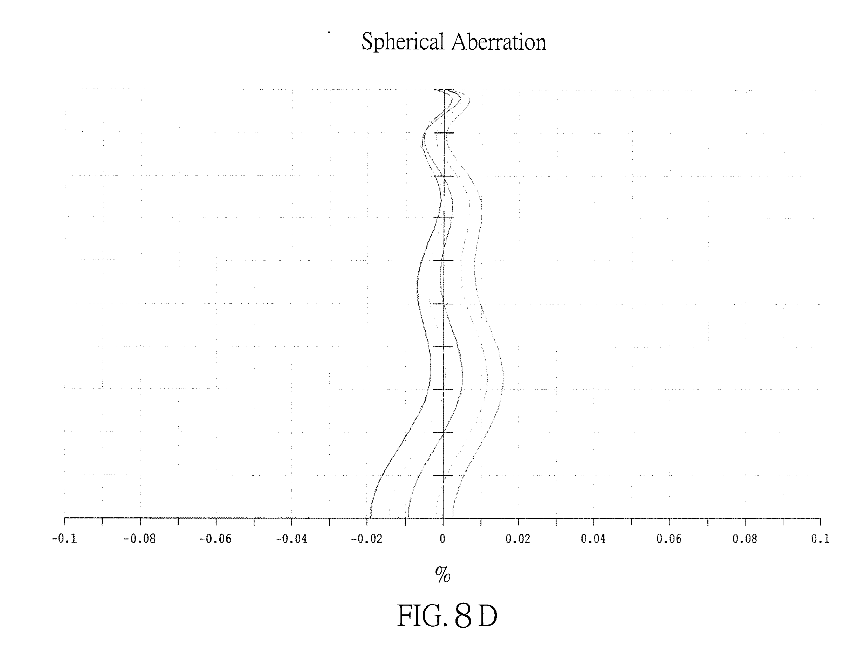

Finally, as shown in FIG. 8A to 8D, the optical imaging lens 4 of the fourth preferred embodiment of the present invention is also able to provide high imaging quality, wherein the maximum field curvature of the optical imaging lens 4 does not exceed -0.02mm and 0.02mm, which can be seen in FIG. 8A; the maximum distortion of the optical imaging lens 4 does not exceed 0% and 3%, which can be seen in FIG. 8B; the chromatic difference of magnification of the optical imaging lens 4 does not exceed -2$\mu$m and 2$\mu$m, which can be seen in FIG. 8C; the spherical aberration of the optical imaging lens 4 does not exceed -0.02 mm and 0.02mm, which can be seen in FIG. 8D. In other words, the optical imaging lens 4 also provides high optical performance.

In summary, with the optical imaging lenses 1-4 provided in the present invention, the purpose of getting miniature size and high optical performance can be effectively achieved. In addition, the visible angle of a wide angle system which adopts any of the optical imaging lenses 1-4 can be broadened.

It must be pointed out that the embodiments described above are only some preferred embodiments of the present invention. All equivalent structures which employ the concepts disclosed in this specification and the appended claims should fall within the scope of the present invention.

Claims

1. An optical imaging lens (1-4), in order from an object side to an image side along an optical axis (Z), comprising:

an aperture (ST);
a first lens (L1) made of glass, which is a positive meniscus lens, wherein a convex surface (S2) thereof faces the object side, and a concave surface (S3) thereof faces the image side; at least one of the surfaces of the first lens (L1) is aspheric;
a second lens (L2) made of plastic, which is a negative meniscus lens, wherein a convex surface (S4) thereof faces the object side, and a concave surface (S5) thereof faces the image side; at least one of the surfaces of the second lens (L2) is aspheric;

a third lens (L3) made of plastic, which is a positive meniscus lens, wherein a convex surface (S7) faces the image side, and a concave surface (S6) thereof faces the object side; at least one of the surfaces of the third lens (L3) is aspheric;

a fourth lens (L4) made of glass, which is a positive meniscus lens with a refractive index no less than 1.7, wherein a convex surface (S9) thereof faces the image side, and a concave surface (S8) thereof faces the object side; at least one of the surfaces of the fourth lens (L4) is aspheric;

a fifth lens (L5) made of plastic, of which a diopter turns from negative to positive from where the optical axis (Z) passes through to a margin of the fifth lens (L5).

2. The optical imaging lens (1-4) of claim 1, wherein the two surfaces (S2, S3) of the first lens (L1) are both aspheric.

3. The optical imaging lens (1-4) of claim 1, wherein the two surfaces (S4, S5) of the second lens (L2) are both aspheric.

4. The optical imaging lens (1-4) of claim 1, wherein the two surfaces (S6, S7) of the third lens (L3) are both aspheric.

5. The optical imaging lens (1-4) of claim 1, wherein the two surfaces (S8, S9) of the fourth lens (L4) are both aspheric.

6. The optical imaging lens (1-4) of claim 1, wherein a surface (S10) of the fifth lens (L5) which faces the object side is concave at where the optical axis (Z) passes through.

7. The optical imaging lens (1-4) of claim 6, wherein a radius of curvature of the surface (S10) of the fifth lens (L5) which faces the object side is negative at where the optical axis (Z) passes through, and the radius of curvature gradually turns from negative to positive from where the optical axis (Z) passes through to the margin of the fifth lens (L5).

8. The optical imaging lens (1-4) of claim 1, wherein a surface (S11) of the fifth lens (L5) which faces the image side is concave at where the optical axis (Z) passes through.

9. The optical imaging lens (1-4) of claim 8, wherein a radius of curvature of the surface (S11) of the fifth lens (L5) which faces the image side is positive at where the optical axis (Z) passes through, and the radius of curvature gradually turns from positive to negative from where the optical axis passes through to the margin of the fifth lens (L5).

10. The optical imaging lens (1-4) of claim 1, further satisfying:

$1.19 \leq f/f1 \leq 1.50$;
where f1 is a focal length of the first lens (L1); f is a focal length of the optical imaging lens (1-4).

11. The optical imaging lens (1-4) of claim 1, further satisfying:

$0.80 \leq f/f4 \leq 1.09$;
where f4 is a focal length of the fourth lens (L4); f is a focal length of the optical imaging lens (1-4).

12. The optical imaging lens (1-4) of claim 1, further satisfying:

$-1.59 \leq f/f5 \leq -1.30$;
where f5 is a focal length of the fifth lens (L5); f is a focal length of the optical imaging lens (1-4).

13. The optical imaging lens (1-4) of claim 1, further satisfying:

$0.08 \leq t10/f \leq 0.13$;
where t10 is a thickness of the fifth lens (L5); f is a focal length of the optical imaging lens (1-4).

14. The optical imaging lens (1-4) of claim 1, wherein an Abbe number of the first lens (L1) is no less than 60.

FIG. 1

EP 3 018 517 A1

EP 3 018 517 A1

Distortion

-10          0          10

%

**FIG. 2 B**

Field Curvature

S   T
+ Y

-0.10        0.00        0.10

mm

**FIG. 2 A**

Chromatic Difference of Magnification

μm

FIG. 2 C

Spherical Aberration

%

FIG. 2 D

EP 3 018 517 A1

FIG. 3

Field Curvature

T S

+Y

-0.10          0.00          0.10

mm

FIG. 4 A

Distortion

-10          0          10

%

FIG. 4 B

Chromatic Difference of Magnification

μm

FIG. 4 C

Spherical Aberration

%

FIG. 4 D

EP 3 018 517 A1

FIG. 5

EP 3 018 517 A1

EP 3 018 517 A1

Distortion

Field Curvature

S +Y T

-10                    0                    10

%

-0.10            0.00            0.10

mm

FIG. 6 B

FIG. 6 A

Chromatic Difference of Magnification

μm

FIG. 6 C

EP 3 018 517 A1

Spherical Aberration

%

FIG. 6D

EP 3 018 517 A1

FIG. 7

Distortion

Field Curvature

-10                    0                    10
%

-0.10          0.00          0.10
mm

FIG. 8 B

FIG. 8 A

Chromatic Difference of Magnification

μm

FIG. 8 C

EP 3 018 517 A1

Spherical Aberration

%

FIG. 8 D

EP 3 018 517 A1

Europäisches Patentamt

European Patent Office

Office européen des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/342919 A1 (TANG HSIANG-CHI [TW] ET AL) 26 December 2013 (2013-12-26)<br>* abstract *<br>* paragraphs [0003], [0094], [0143] - [0151]; figure 4A; tables 7,8 * | 1-14 | INV.<br>G02B13/00 |
| A | US 2013/010374 A1 (HSIEH DUNG-YI [TW] ET AL) 10 January 2013 (2013-01-10)<br>* abstract *<br>* paragraphs [0003], [0050] - [0078]; tables 1,2 * | 1-14 | |
| A | US 2011/273611 A1 (MATSUSAKA KEIJI [JP] ET AL) 10 November 2011 (2011-11-10)<br>* abstract *<br>* paragraphs [0131] - [0240], [0277]; figure 1 * | 1-14 | |

TECHNICAL FIELDS SEARCHED (IPC)

G02B

The present search report has been drawn up for all claims

| Place of search | Date of completion of the search | Examiner |
|---|---|---|
| The Hague | 8 April 2015 | Cohen, Adam |

## ANNEX TO THE EUROPEAN SEARCH REPORT
## ON EUROPEAN PATENT APPLICATION NO.

EP 14 19 1786

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2015

| Patent document cited in search report | | Publication date | Patent family member(s) | | | Publication date |
|---|---|---|---|---|---|---|
| US 2013342919 | A1 | 26-12-2013 | CN | 103513405 | A | 15-01-2014 |
| | | | CN | 202837659 | U | 27-03-2013 |
| | | | TW | 201248187 | A | 01-12-2012 |
| | | | US | 2013342919 | A1 | 26-12-2013 |
| US 2013010374 | A1 | 10-01-2013 | CN | 102866479 | A | 09-01-2013 |
| | | | CN | 202305970 | U | 04-07-2012 |
| | | | TW | 201303348 | A | 16-01-2013 |
| | | | US | 2013010374 | A1 | 10-01-2013 |
| US 2011273611 | A1 | 10-11-2011 | CN | 102483512 | A | 30-05-2012 |
| | | | JP | 5115647 | B2 | 09-01-2013 |
| | | | JP | 5131380 | B2 | 30-01-2013 |
| | | | JP | 5472307 | B2 | 16-04-2014 |
| | | | JP | 2012103717 | A | 31-05-2012 |
| | | | JP | 2012113311 | A | 14-06-2012 |
| | | | US | 2011273611 | A1 | 10-11-2011 |
| | | | WO | 2011027690 | A1 | 10-03-2011 |

EPO FORM P0459

For more details about this annex : see Official Journal of the European Patent Office, No. 12/82